# EUROPÄISCHE PATENTANMELDUNG

(11) **EP 2 799 889 A1**
(43) Veröffentlichungstag der Anmeldung: **05.11.2014**
(21) Anmeldenummer: 14162644.0
(22) Anmeldetag: 31.03.2014
(51) Int. Cl.: G01P 3/48, G01P 3/488, G01L 3/10

(54) **Verfahren zur Bestimmung der Drehzahl und des Drehmoments einer Welle**

(30) Priorität: 30.04.2013 DE 102013207936
(71) Anmelder: Schaeffler Technologies GmbH & Co. KG, 91074 Herzogenaurach (DE)
(72) Erfinder: Wittmann, Bernd, 96178 Pommersfelden (DE); Gerner, Armin, 96178 Pommersfelden (DE)

(57) **Zusammenfassung**

Die Erfindung betrifft ein Verfahren zur Bestimmung der Drehzahl einer Welle, wobei die Drehzahl der Welle aus einem von einem Drehmomentsensor (3) detektierten Drehmomentsignal ermittelt wird. Weiterhin betrifft der Erfindung eine Messvorrichtung (1) zur Drehzahlbestimmung einer Welle, umfassend einen Drehmomentsensor (3) zur Detektion eines Drehmomentsignals der Welle, sowie umfassend einen dem Drehmomentsensor (3) nachgeschalteten Hochpassfilter (7) zur Ermittlung der Drehzahl aus dem Drehmomentsignal des Drehmomentsensor (3).

## Beschreibung

### Gebiet der Erfindung

Die Erfindung betrifft ein Verfahren zur Bestimmung der Drehzahl einer Welle.

Weiterhin betrifft die Erfindung eine Messvorrichtung zur Drehzahlbestimmung einer Welle.

### Hintergrund der Erfindung

Die Erfassung von Drehmomenten und Drehzahlen ist insbesondere zur Steuerung von Antriebseinheiten, beispielsweise in Getrieben von Kraftfahrzeugen oder Arbeitsmaschinen, notwendig. Die Bestimmung der Drehzahl einer Welle, wie beispielsweise einer Antriebswelle, erfolgt hierbei üblicherweise über einen entsprechend ausgebildeten Drehzahlsensor, der beispielsweise berührungslos die Drehzahl der Welle erfasst. Zusätzlich hierzu wird zur Ermittlung des Drehmoments üblicherweise ein separater Drehmomentsensor eingesetzt.

Das Drehmoment wird hierbei häufig mittels magnetischer Methoden, beispielsweise mittels magnetostriktiver Sensoren gemessen. Derartige magnetostriktive Sensoren nutzen die Eigenschaften magnetischer Materialien aus, indem sie bei einer Verformung des Materials, wie beispielsweise bei Zug- oder Druckspannungen, eine Änderung des in dem Material induzierten Magnetfeldes detektieren. Somit kann über die Änderung des Magnetfeldes in Abhängigkeit der Verformung des Materials das Drehmoment einer Welle bestimmt werden. Zur Ermittlung der Drehzahl können beispielsweise Hall-Sensoren, XMR-Sensoren, optische oder induktive Sensoren eingesetzt werden.

Somit sind zur Ermittlung des Drehmoments und der Drehzahl einer Welle zwei separate Sensoren notwendig, wodurch sowohl der Bauraumbedarf als auch die Kosten unerwünscht hoch sind.

### Aufgabe der Erfindung

Es ist demnach eine erste Aufgabe der Erfindung, ein Verfahren anzugeben, welches eine kostenreduzierte und einfach durchführbare Bestimmung der Drehzahl einer Welle ermöglicht.

Eine zweite Aufgabe der Erfindung ist es, eine Messvorrichtung anzugeben, die eine entsprechend kostengünstige und einfach umsetzbare Bestimmung der Drehzahl möglich macht.

### Zusammenfassung der Erfindung

Die erste Aufgabe der Erfindung wird erfindungsgemäß gelöst durch ein Verfahren zur Bestimmung der Drehzahl einer Welle, wobei die Drehzahl der Welle aus einem von einem Drehmomentsensor detektierten Drehmomentsignal ermittelt wird.

Der Erfindung liegt hierbei die Erkenntnis zugrunde, dass beispielsweise in einem Kraftfahrzeug oder auch in Arbeitsmaschinen die Kenntnis von Drehzahl und Drehmoment einer rotierenden Welle notwendig ist. Hierzu werden bislang allerdings zwei separate Sensoren eingesetzt werden, die der Ermittlung jeweils eines Ausgangssignals, also einer separaten Ermittlung von Drehzahl und Drehmoment, dienen. Durch den Einsatz von zwei Sensoren sind allerdings die Kosten und der Bauraumbedarf entsprechend hoch. Eine kostengünstigere und platzsparendere Alternative ist allerdings bislang nicht umgesetzt worden.

Unter Berücksichtigung dieser Problematik erkennt die Erfindung, dass eine Bestimmung der Drehzahl überraschend einfach ohne einen extra hierfür vorgesehen Drehzahlsensor dann möglich ist, wenn die Drehzahl der Welle aus einem von einem Drehmomentsensor detektierten Drehmomentsignal ermittelt wird. Das von einem Drehmomentsensor generierte Messsignal wird hierzu insbesondere derart ausgewertet, dass neben dem Drehmomentsignal auch das Drehzahlsignal ermittelt wird. Der bislang übliche Einsatz eines separaten Drehzahlsensors zur Ermittlung der Drehzahl entfällt.

Mit anderen Worten kann durch eine geschickte Auswertung bzw. Analyse des Drehmomentsignals einer Welle auch die Drehzahl aus dem Drehmomentsignal ermittelt werden, ohne dass hierzu ein zusätzlicher Drehzahlsensor eingesetzt werden muss.

Die Möglichkeit zur Verwendung lediglich eines Drehmomentsensors zur Ermittlung der Drehzahl und des Drehmoments aus dem Drehmomentsignal der Welle beruht auf der Überlagerung von im Drehmomentsignal enthaltenen hochfrequenten und niederfrequenten Anteilen. Diese unterschiedlichen Frequenzanteile entstehen zum Beispiel durch dynamische Änderungen des Drehmoments, wie sie durch die Verzahnung in einem Getriebe, durch Motorkommutierung oder auch durch einen unrunden Tritt bei einem Fahrradantrieb entstehen können. Die niederfrequenten Anteile resultieren hier beispielsweise aus einer langsamen Änderung eines Drehmoments einer Welle, wie sie beispielsweise beim Anfahren resultiert. Die hochfrequenten Anteile werden beispielsweise durch periodisch mit der Drehung der Welle wiederkehrende Änderungen des Drehmoments hervorgerufen. Diese hochfrequenten Anteile überlagern die niederfrequenten Anteile und lassen sich durch eine gezielte Signalaufbereitung voneinander trennen.

So kann durch eine Analyse bzw. Auswertung des niederfrequenten Anteils des Drehmomentsignals das Drehmoment einer Welle ermittelt werden. Die hochfrequenten Anteile ermöglichen die Ermittlung der Drehzahl bei einer periodisch wiederkehrenden, dynamischen Änderung des Drehmoments.

In einer vorteilhaften Ausgestaltung der Erfindung wird das vom Drehmomentsensor detektierte Drehmomentsignal unter Ausnutzung des magnetostriktiven Effekts ermittelt. Als Magnetostriktion wird die Deformation magnetischer Körper infolge eines angelegten magnetischen Feldes bezeichnet. Dabei erfährt der Körper bei konstantem Volumen eine elastische Längenänderung. Hierbei ist vorzugsweise zumindest ein Teil der Welle aus einem magnetostriktiven, also beispielsweise einem ferromagnetischen Material, gefertigt. Zur Messung des Drehmomentsignals mittels eines eingesetzten Drehmomentsensors wird die Welle magnetisiert und bei Verformung eine Änderung des Magnetfelds detektiert. Die Änderung des Magnetfelds ist hierbei abhängig von dem Maß der Verformung der Welle, wobei die Verformung der Welle wiederum abhängig vom Drehmoment ist. So kann aus dem Maß der Verformung der Welle durch die Messung einer Magnetfeldänderung ein Drehmomentsignal ermittelt werden.

Alternativ zur einer aus einem magnetostriktiven Material gefertigten Welle, entweder vollständig oder zumindest teilweise, kann beispielsweise auch eine magnetisierbare Beschichtung auf die Welle aufgebracht sein. Insgesamt eignet sich das Verfahren grundsätzlich für den Einsatz in alle solchen Antriebseinheiten, bei denen die Messung des Drehmoments mittels Magnetostriktion erfolgt.

Grundsätzlich kann das Drehzahlsignal durch Filterung des Drehmomentsignals mittels verschiedener Filter, beispielsweise mittels eines Bandpassfilters ermittelt werden. Die Filterung ist hierbei beispielsweise durch den Einsatz entsprechend ausgebildeter Software oder Hardware ausführbar.

Vorzugsweise wird das Drehzahlsignal durch Filterung des Drehmomentsignals mittels eines Hochpassfilters ermittelt. Ein Hochpassfilter lässt die Frequenzen oberhalb seiner Grenzfrequenz annähernd ungeschwächt passieren und dämpft tiefere Frequenzen. Mittels eines Hochpassfilters können so hochfrequente Anteile aus dem Messsignal, also dem Drehmomentsignal gefiltert und hinsichtlich der zu ermittelnden Drehzahl ausgewertet werden.

Bevorzugt wird das durch die Filterung des Drehmomentsignals ermittelte Drehzahlsignal mittels einer Signalauswerteeinheit analysiert. Die Signalauswerteeinheit ist hierbei zweckmäßigerweise dem Hochpassfilter nachgeschaltet und beispielsweise als ein sogenannter Schmitt-Trigger ausgebildet. Ein Schmitt-Trigger ist ein sogenannter Schwellenwerttrigger. Ein solcher Schwellenwerttrigger herangezogen, um beispielsweise dann, wenn ein vorgegebener Signalwert überschritten wird, ein entsprechendes Ausgangssignal zu erzeugen. Aus der Abfolge der ermittelten Ausgangssignale lässt sich dann - gewissermaßen digitalisiert - die Drehzahl ermitteln. Weiterhin sind selbstverständlich auch andere Signalauswerteeinheiten zur Analyse des Drehzahlsignals denkbar.

Zweckmäßigerweise wird demnach das mittels der Signalauswerteeinheit analysierte Drehzahlsignal als digitales Drehzahlsignal verwendet. Gegebenfalls ist zusätzlich zur Signalauswerteeinheit eine Digitalisierungseinheit eingesetzt.

Grundsätzlich kann auch das Drehmoment der Welle aus dem vom Drehmomentsensor detektierten Drehmomentsignal durch den Einsatz unterschiedlicher Filter, wie beispielsweise durch den Einsatz eines Bandpassfilters ermittelt werden. Die Filterung kann, wie auch bei der Ermittlung der Drehzahl, durch eine entsprechende Software oder eine entsprechende Hardware ausgeführt werden.

Bevorzugt wird das Drehmoment der Welle aus dem vom Drehmomentsensor detektierten Drehmomentsignal durch Filterung mittels eines Tiefpassfilters ermittelt. Die Ermittlung des Drehmoments erfolgt hierbei insbesondere zusätzlich und im Wesentlichen gleichzeitig mit der Ermittlung der Drehzahl. Auf diese Weise können aus einem Drehmomentsensorsignal zwei Ausgangssignale, nämlich die Drehzahl und das Drehmoment einer Welle, generiert werden. Der zur Filterung des Drehmomentsignals eingesetzte Tiefpassfilter lässt im Gegensatz zum Hochpassfilter die Signalanteile mit Frequenzen unterhalb seiner Grenzfrequenz annähernd ungeschwächt passieren. Signalanteile mit höheren Frequenzen, wie beispielsweise die bereits benannten periodisch mit der Drehung der Welle wiederkehrende Änderungen des Drehmoments werden hingegen abgeschwächt. So werden durch den Einsatz eines Tiefpassfilters nur niederfrequente Signale, wie zum Beispiel eine langsame Änderung eines Drehmoments einer Welle, gefiltert, so dass das Drehmoment selektiv ermittelt werden kann.

In einer besonders vorteilhaften Ausgestaltung der Erfindung wird das vom Drehmomentsensor detektierte Messsignal zur Ermittlung des zweiten Ausgangssignals von einem als Hochpassfilter ausgebildeten Signalfilter gefiltert. Im Unterschied zu einem Tiefpassfilter lassen Hochpassfilter die Frequenzen oberhalb ihrer Grenzfrequenz annähernd ungeschwächt passieren und dämpfen tiefere Frequenzen. Mittels eines Hochpassfilters können so hochfrequente Signale, wie beispielsweise eine Drehzahl aus dem Messsignal gefiltert und entsprechend ausgewertet werden.

Die zweite Aufgabe der Erfindung wird erfindungsgemäß gelöst durch eine Messvorrichtung zur Drehzahlbestimmung einer Welle, umfassend einen Drehmomentsensor zur Detektion eines Drehmomentsignals der Welle, sowie umfassend einen dem Drehmomentsensor nachgeschalteten Hochpassfilter zur Ermittlung der Drehzahl aus dem Drehmomentsignal des Drehmomentsensor.

Eine solche Messvorrichtung ermöglicht die Ermittlung des Drehmoments und der Drehzahl einer Welle durch den Einsatz lediglich eines Drehmomentsensors. Der eingesetzte Drehmomentsensor ermöglicht durch gezielte Auswertung bzw. Analyse des Drehmomentsignals zusätzlich die Ermittlung der Drehzahl der Welle. So können auf überraschend einfache Weise sowohl Kosten eingespart als auch der Aufbau der Messvorrichtung vereinfacht werden.

Zweckmäßigerweise ist dem Drehmomentsensor zusätzlich ein Tiefpassfilter zur Ermittlung des Drehmoments aus dem Drehmomentsignal nachgeschaltet. So wird aus dem analogen Drehmomentsignal ein digitales Drehmoment generiert.

Um eine Drehzahlbestimmung zu ermöglichen, wird der magnetostriktive Effekt ausgenutzt. Im eingebauten Zustand einer Welle wird so mittels eines Drehmomentsensors die Magnetfeldänderung einer verformbaren Welle detektiert. Hierzu ist die Welle vorzugsweise zumindest teilweise aus einem magnetostriktiven Material ausgebildet.

Aus dem Sensorsignal werden sowohl das Drehmomentsignal als auch das Drehzahlsignal ermittelt. Um das Drehzahlsignal entsprechend auszuwerten, ist dem Hochpassfilter zweckmäßigerweise eine Signalauswerteeinheit, wie beispielsweise eine Triggereinheit, zur Analyse des gefilterten Drehzahlsignals nachgeschaltet. Die Signalauswerteeinheit bzw. die Triggereinheit kann insbesondere als ein Schmitt-Trigger ausgebildet sein, wobei selbstverständlich auch der Einsatz anderer Signalauswerteeinheiten möglich ist, die eine entsprechende Analyse des hochpassgefilterten Drehmomentsignals ermöglichen.

Weitere vorteilhafte Ausgestaltungen der Messvorrichtung ergeben sich aus den auf das Verfahren gerichteten Unteransprüchen. Die hierzu genannten Vorteile können entsprechend sinngemäß auf die Messvorrichtung übertragen werden.

### Kurze Beschreibung der Zeichnungen

Im Folgenden wird ein Ausführungsführungsbeispiel der Erfindung anhand einer Zeichnung näher erläutert. Hierbei zeigt:

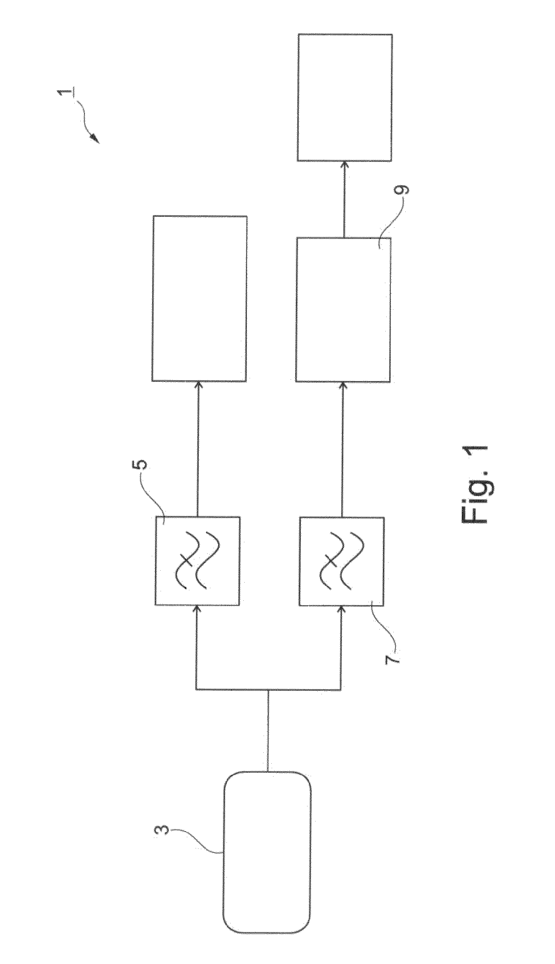

- Fig. 1: einen Ausschnitt einer Messvorrichtung zur Verfahren zur Bestimmung der Drehzahl einer Welle.

### Detaillierte Beschreibung der Zeichnungen

In Fig. 1 ist ein Ausschnitt einer Messvorrichtung 1 gezeigt, die zur Durchführung eines Verfahrens zur Bestimmung der Drehzahl einer Welle eingesetzt ist. Die Messvorrichtung 1 umfasst einen Drehmomentsensor 3, der das Drehmoment einer rotierenden Welle misst. Hierzu ist die Welle, die vorliegend nicht gezeigt ist, aus einem magnetostriktiven Material gefertigt. Die Welle kann hierbei entweder vor dem Einbau in einem Kraftfahrzeug magnetisiert werden. Alternativ kann die Welle auch nach erfolgtem Einbau magnetisiert werden.

Bei einer Verformung der Welle, also beispielsweise bei einer Deformation in Form einer Längenänderung durch Zug- und/oder Druckspannung, ändert sich das Magnetfeld. Diese Magnetfeldänderung wird von dem Drehmomentsensor 3 erfasst und analysiert. Hierbei wird vom Drehmomentsensor 3 ein analoges Drehmomentsignal generiert. Das analoge Drehmomentsignal wird zur Verfeinerung in einem als Tiefpassfilter 5 ausgebildeten Signalfilter entsprechend gefiltert und ein Drehmomentsignal ausgegeben. Das Drehmomentsignal kann hierbei entweder digital oder analog sein.

Zusätzlich wird das analoge Drehmomentsignal hochpassgefiltert. Auf diese Weise wird ein Drehzahlsignal der rotierenden Welle ermittelt, ohne dass zusätzlich zum Drehmomentsensor 3 ein separater Drehzahlsensor notwendig ist. Das in dem Hochpassfilter 7 gefilterte Signal wird zur Analyse zum Beispiel einer als Schmitt-Trigger ausgebildeten Signalauswerteeinheit 9 zugeführt.

Somit kann durch die gezielte und im Wesentlichen gleichzeitige Filterung des vom Drehmomentsensor 3 ausgegebenen Drehmomentsignals auf einfache und kostengünstige Weise sowohl das Drehmoment als auch die Drehzahl einer Welle ermittelt werden. Auf einen zusätzlichen Drehzahlsensor kann verzichtet werden.

### Bezugszeichenliste

- 1: Messvorrichtung
- 3: Drehmomentsensor
- 5: Tiefpassfilter
- 7: Hochpassfilter
- 9: Signalauswerteeinheit

## Patentansprüche

1. Verfahren zur Bestimmung der Drehzahl einer Welle, wobei die Drehzahl der Welle aus einem von einem Drehmomentsensor (3) detektierten Drehmomentsignal ermittelt wird.

2. Verfahren nach Anspruch 1, wobei das vom Drehmomentsensor (3) detektierte Drehmomentsignal unter Ausnutzung des magnetostriktiven Effekts ermittelt wird.

3. Verfahren nach Anspruch 1 oder 2, wobei das Drehzahlsignal durch Filterung des Drehmomentsignals mittels eines Hochpassfilters (7) ermittelt wird.

4. Verfahren nach einem der vorhergehenden Ansprüche, wobei das durch die Filterung des Drehmomentsignals ermittelte Drehzahlsignal mittels einer Triggereinheit (9) analysiert wird.

5. Verfahren nach Anspruch 4, wobei das mittels der Triggereinheit (9) analysierte Drehzahlsignal als digitales Drehzahlsignal verwendet wird.

6. Verfahren nach einem der vorhergehenden Ansprüche, wobei zusätzlich zur Ermittlung der Drehzahl das Drehmoment der Welle aus dem vom Drehmomentsensor (3) detektierten Drehmomentsignal durch Filterung mittels eines Tiefpassfilters (9) ermittelt wird.

7. Messvorrichtung (1) zur Drehzahlbestimmung einer Welle, umfassend einen Drehmomentsensor (3) zur Detektion eines Drehmomentsignals der Welle, sowie umfassend einen dem Drehmomentsensor (3) nachgeschalteten Hochpassfilter (7) zur Ermittlung der Drehzahl aus dem Drehmomentsignal des Sensors (3).

8. Messvorrichtung (1) nach Anspruch 7, wobei ein dem Drehmomentsensor (3) nachgeschalteter Tiefpassfilter (5) zur Ermittlung des Drehmoments aus dem Drehmomentsignal des Sensors (3) umfasst ist.

9. Messvorrichtung (1) nach Anspruch 7 oder 8, wobei zur Drehzahlbestimmung einer Welle diese zumindest teilweise aus einem magnetostriktiven Material ausgebildet ist.

10. Messvorrichtung (1) nach einem der Ansprüche 7 bis 9, wobei dem Hochpassfilter (7) eine Signalauswerteeinheit (9) zur Analyse des gefilterten Drehzahlsignals nachgeschaltet ist.
